# FASCICULE DE BREVET EUROPEEN

(11) **EP 3 088 273 B1**
(45) Date de publication et mention de la délivrance du brevet: **12.02.2020**
(21) Numéro de dépôt: 16167484.1
(22) Date de dépôt: 28.04.2016
(51) Int. Cl.: B61D 27/00, B61D 17/12

(54) **DISPOSITIF DE CLIMATISATION HOMOGÈNE D'UNE VOITURE DE VÉHICULE FERROVIAIRE**
HOMOGENES KLIMAANLAGENGERÄT EINES WAGENS EINES SCHIENENFAHRZEUGS
AN AIR CONDITIONING DEVICE FOR AN HOMOGENEOUS AIR CONDITIONING OF A CARRIAGE OF A RAILWAY VEHICLE

(30) Priorité: 28.04.2015 FR 1553806
(43) Date de publication de la demande: 02.11.2016
(73) Titulaire: ALSTOM Transport Technologies, 93400 Saint-Ouen (FR)
(72) Inventeur: DO, Huu-Thi, 17300 Rochefort (FR); VARIN, Etienne, 17140 Lagord (FR)
(74) Mandataire: Lavoix

(56) Documents cités:
- EP-A1- 2 792 517
- WO-A1-2013/037335
- DE-A1-102007 023 249
- DE-B3-102009 056 968
- US-A- 4 062 273
- US-A1- 2013 185 939

## Description

La présente invention concerne un dispositif de climatisation d'au moins une voiture d'un véhicule ferroviaire.

On connaît déjà, dans l'état de la technique, un dispositif de climatisation comprenant des moyens d'émission d'un flux d'air climatisé et un réseau de circulation de l'air climatisé. Le réseau de circulation comporte un premier circuit de circulation d'air équipant une première voiture de véhicule ferroviaire.

Un dispositif de climatisation semblable à celui du préambule de la revendication 1 est par exemple décrit dans EP 2 792 517.

Habituellement, le premier circuit de circulation d'air comprend un module de guidage d'air climatisé, comportant une ouverture d'arrivée d'air provenant des moyens d'émission, et au moins un premier conduit de circulation d'air, s'étendant dans une direction longitudinale en aval du module de guidage. Ainsi, le module de guidage guide le flux d'air depuis l'ouverture d'arrivée d'air vers le premier conduit de circulation.

Le premier circuit de circulation comporte en outre des éléments latéraux de distribution d'air vers une salle de la voiture, ces éléments latéraux s'étendant parallèlement au premier conduit de circulation d'air, de part et d'autre de ce premier conduit de circulation d'air dans une direction transversale perpendiculaire à la direction longitudinale, et ils communiquent avec ce premier conduit de circulation d'air.

Chacun de ces éléments latéraux comporte une première partie, s'étendant dans la direction longitudinale le long du premier conduit de circulation d'air, cette première partie communiquant avec ce premier conduit de circulation d'air, et une seconde partie s'étendant dans la direction longitudinale le long du module de guidage. Cette seconde partie de l'élément latéral est destinée à l'évacuation de l'air de la salle, en vue de sa récupération par les moyens d'émission pour réaliser une climatisation en circuit fermé, en passant au travers d'un conduit d'évacuation ménagé dans le module de guidage.

Du fait de cette évacuation de l'air, par les éléments latéraux, au niveau du module de guidage, il apparaît que le dispositif de climatisation ne diffuse pas d'air climatisé au niveau de ce module de guidage. Ainsi, la diffusion d'air climatisé dans la salle n'est pas homogène.

L'invention a notamment pour but de remédier à cet inconvénient, en fournissant un dispositif de climatisation propre à réaliser une diffusion homogène d'air climatisé dans une voiture d'un véhicule ferroviaire.

A cet effet, l'invention a notamment pour objet un dispositif de climatisation d'au moins une voiture d'un véhicule ferroviaire, ladite voiture s'étendant dans une direction longitudinale, le dispositif de climatisation comprenant des moyens d'émission d'un flux d'air climatisé et un réseau de circulation de l'air climatisé, ledit réseau de circulation comportant un premier circuit de circulation d'air, comprenant :
- un module de guidage d'air climatisé, comprenant une ouverture d'arrivée d'air provenant des moyens d'émission,
- au moins un premier conduit de circulation d'air, s'étendant dans la direction longitudinale en aval du module de guidage,
- des éléments latéraux de distribution d'air vers une salle de la voiture, s'étendant parallèlement au premier conduit de circulation d'air, agencés de part et d'autre du premier conduit de circulation d'air dans une direction transversale perpendiculaire à la direction longitudinale, et communiquant avec ce premier conduit de circulation d'air,
caractérisé en ce que le module de guidage comporte des moyens de répartition propres à séparer un flux d'air issu de l'ouverture d'arrivée d'air, d'une part vers le premier conduit de circulation d'air, et d'autre part vers chaque élément latéral de distribution.

Le dispositif de climatisation selon l'invention comporte des moyens de répartition dirigeant une partie du flux d'air issu de l'ouverture d'arrivée d'air vers les éléments latéraux de distribution, et plus particulièrement vers la partie de chaque élément latéral qui se situe le long du module de guidage.

Il en résulte que la diffusion d'air n'est plus effectuée seulement sur les parties des éléments de distribution latéraux disposées le long du premier conduit de circulation d'air, mais également sur les parties de ces éléments latéraux de distribution s'étendant le long du module de guidage. En d'autres termes, la diffusion d'air climatisé est homogène sur toute la longueur de la voiture.

Un dispositif de climatisation selon l'invention peut comporter en outre l'une ou plusieurs des caractéristiques suivantes, prises seules ou selon toutes combinaisons techniquement envisageables.
- Chaque élément latéral de distribution comporte : une première partie s'étendant dans la direction longitudinale le long du premier conduit de circulation d'air, cette première partie communiquant avec ce premier conduit de circulation d'air, et une seconde partie s'étendant dans la direction longitudinale le long du module de guidage, cette seconde partie communiquant avec les moyens de répartition.
- Le réseau de circulation comporte un second conduit de circulation d'air, s'étendant dans la direction longitudinale à destination d'un second circuit de circulation d'air équipant une voiture adjacente du véhicule ferroviaire, les premier et second conduits de circulation d'air s'étendant de part et d'autre du module de guidage dans la direction longitudinale, et les moyens de répartition sont propres à séparer un flux d'air issu de l'ouverture d'arrivée d'air d'une part vers les premier et second conduits de circulation d'air, et d'autre part vers la seconde partie de chaque élément latéral de distribution.

- Le dispositif de climatisation comporte au moins un conduit d'évacuation d'air, s'étendant dans une direction verticale perpendiculaire aux directions longitudinale et transversale, et débouchant dans ladite salle de la voiture, ledit conduit d'évacuation s'étendant de préférence en travers du module de guidage.
- Le dispositif de climatisation comporte au moins deux conduits d'évacuation d'air, débouchant chacun dans un conduit de récupération d'air commun, ledit conduit de récupération d'air surplombant une surface inférieure du module de guidage, pour laisser un passage d'air sous ce conduit de récupération.
- Les moyens de répartition comportent un premier élément déflecteur, comprenant deux surfaces incurvées convergeant l'une vers l'autre jusqu'à un bord d'attaque, ledit bord d'attaque étant agencé en regard de l'ouverture d'arrivée d'air.
- Les moyens de répartition comportent deux seconds éléments déflecteurs sensiblement symétriques par rapport à un plan médian vertical parallèle à la direction longitudinale, chaque second élément déflecteur comprenant : une première paroi, comprenant un bord d'attaque agencé en regard de l'ouverture d'arrivée d'air, et deux secondes parois, divergeant l'une par rapport à l'autre depuis la première paroi vers le conduit de distribution correspondant.
- Les premières parois des deux seconds éléments déflecteurs sont inclinées, convergeant l'une vers l'autre en direction de l'ouverture d'arrivée d'air.
- Chacun des seconds éléments déflecteurs est formé par une feuille pliée pour former les première et secondes parois, par exemple une feuille métallique.

L'invention concerne également un véhicule ferroviaire, notamment un tramway, caractérisé en ce qu'il comporte un dispositif de climatisation tel que défini précédemment.

L'invention sera mieux comprise à la lecture de la description qui va suivre, donnée uniquement à titre d'exemple et faite en se référant aux figures annexées parmi lesquelles :
- la figure 1 est une vue en perspective d'une voiture de véhicule ferroviaire, comprenant un dispositif de climatisation selon un exemple de mode de réalisation de l'invention ;
- la figure 2 est une vue en perspective d'un module de guidage du dispositif de climatisation de la figure 1.

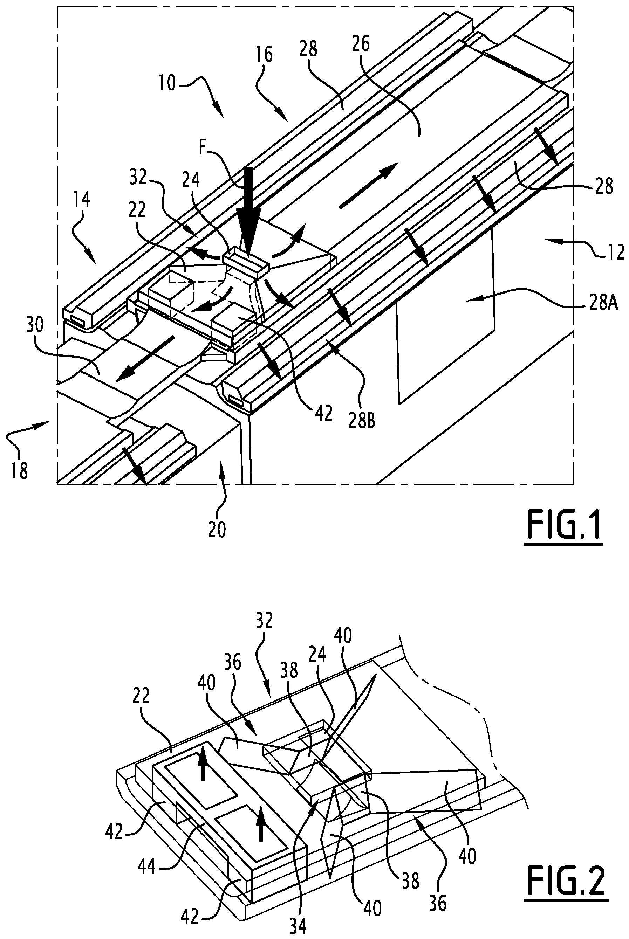

On a représenté, sur la figure 1, un dispositif 10 de climatisation d'au moins une première voiture 12 d'un véhicule ferroviaire, notamment d'un tramway. Ladite première voiture 12 s'étend le long d'une direction longitudinale X. La première voiture 12 comporte une salle intérieure, et présente un plafond délimitant en hauteur cette salle intérieure. Par ailleurs, la première voiture 12 comporte un pavillon surplombant ledit plafond.

Le dispositif de climatisation 10 comprend des moyens (non représentés) d'émission d'un flux d'air climatisé, agencés sur le pavillon de la première voiture 12. De tels moyens d'émission sont classiques, et ne seront donc pas décrits en détail.

Le dispositif de climatisation 10 comporte par ailleurs un réseau 14 de circulation de l'air climatisé, ce réseau de circulation comprenant un premier circuit de circulation d'air 16 équipant la première voiture 12, et, avantageusement, un second circuit 18 de circulation d'air équipant une seconde voiture 20 adjacente à la première voiture 12.

Le premier circuit de circulation d'air 16 comprend un module 22 de guidage d'air climatisé, agencé entre le plafond et un pavillon de la voiture 12. Le module de guidage 22 comprend une ouverture 24 d'arrivée d'air provenant des moyens d'émission. On a représenté, sur la figure 1, un flux d'air F provenant des moyens d'émission, et entrant dans le module de guidage d'air 22 à travers l'ouverture d'arrivée d'air 24.

Le premier circuit de circulation d'air 16 comporte par ailleurs un premier conduit de circulation d'air 26, s'étendant dans la direction longitudinale X en aval du module de guidage 22, et communiquant avec ce module de guidage 22. Par exemple, le premier conduit de circulation d'air 26 est délimité en hauteur entre le plafond et le pavillon de la première voiture 12.

Le premier circuit de circulation d'air 16 comporte en outre des éléments latéraux 28 de distribution d'air vers la salle de la première voiture 12, s'étendant parallèlement au premier conduit de circulation d'air 26, ces éléments latéraux 28 étant agencés de part et d'autre du premier conduit de circulation d'air 26 dans une direction transversale Y perpendiculaire à la direction longitudinale X.

Chaque élément latéral de distribution 28 comporte une première partie 28A s'étendant, dans la direction longitudinale X, le long du premier conduit de circulation d'air 26, cette première partie 28A communiquant avec ce premier conduit de circulation d'air 26, et une seconde partie 28B s'étendant, dans la direction longitudinale X, le long du module de guidage 22, cette seconde partie 28B communiquant avec le module de guidage 22. Ainsi, l'élément latéral de distribution 28 s'étend dans la direction longitudinale X le long de la salle de la première voiture 12.

Chaque élément latéral de distribution 28 comporte une sortie d'air climatisé, comprenant au moins un orifice de sortie d'air. Cette sortie d'air climatisé s'étend le long de cet élément latéral de distribution 28 dans la direction longitudinale X. Par exemple, la sortie d'air climatisé est formée par une fente s'étendant sur toute la longueur de l'élément latéral de distribution 28 correspondant et débouchant dans la salle de la première voiture 12. Cette fente s'étend notamment à la fois sur la première partie 28A et sur la seconde partie 28B de cet élément latéral de distribution 28.

On notera que les première 28A et seconde 28B parties peuvent être séparées par une cloison interne ménagée dans l'élément latéral de distribution 28 correspondant, ou en variante peuvent communiquer l'une avec l'autre.

Le dispositif de climatisation 10 comporte par ailleurs un second conduit de circulation d'air 30, s'étendant, dans la direction longitudinale X, en aval du module de guidage 22 dans un sens de circulation d'air, jusqu'au second circuit de circulation d'air 18 équipant la seconde voiture adjacente 20. Les premier 26 et second 30 conduits de circulation d'air s'étendent alors de part et d'autre du module de guidage 22 dans la direction longitudinale X.

Le module de guidage 22 comporte des moyens 32 de répartition, propres à séparer le flux d'air F issu de l'ouverture d'arrivée d'air 24, d'une part vers le premier conduit de circulation d'air 26 et vers le second conduit de circulation d'air 30, et d'autre part vers chaque élément latéral de distribution 28, et plus particulièrement vers la seconde partie 28B de chaque élément latéral de distribution 28.

En d'autres termes, chaque seconde partie 28B communique avec les moyens de répartition 32.

Les moyens de répartition 32, qui sont représentés plus en détail sur la figure 2, comportent un premier élément déflecteur 34 de type classique, destiné à séparer une partie du flux d'air vers les premier 26 et second 30 conduits de circulation d'air. Ce premier élément déflecteur 34 comprend deux surfaces incurvées convergeant l'une vers l'autre jusqu'à un bord d'attaque, ledit bord d'attaque étant agencé en regard de l'ouverture d'arrivée d'air 24. Un tel premier élément déflecteur 34 est généralement appelé « déflecteur en aile de mouette ».

Les moyens de répartition 32 comportent par ailleurs deux seconds éléments déflecteurs 36, disposés sensiblement symétriquement par rapport à un plan médian vertical parallèle à la direction longitudinale.

Chacun de ces seconds éléments déflecteurs 36 comporte une première paroi 38, comprenant un bord d'attaque agencé en regard de l'ouverture d'arrivée d'air 24, et deux secondes parois 40, divergeant l'une par rapport à l'autre depuis la première paroi 38 correspondante vers la seconde partie 28B du conduit de distribution 28 correspondant.

Avantageusement, les premières parois 38 des deux seconds éléments déflecteurs 36 sont inclinées par rapport au plan médian vertical, convergeant l'une vers l'autre en direction de l'ouverture d'arrivée d'air 24.

Chacun des seconds éléments déflecteurs 36 est par exemple formé par une feuille pliée, notamment une feuille métallique.

Puisque les bords d'attaque des premières parois 38 sont agencés en regard de l'ouverture d'arrivée d'air 24, une partie du flux d'air entrant F est déviée par chacun de ces seconds éléments déflecteurs 36.

Ainsi, le flux d'air entrant F est séparé en quatre parties, à savoir deux parties principales, l'une dirigée vers le premier conduit de circulation 26 et l'autre vers le second conduit de circulation 30, et deux parties secondaires, chacune dirigée vers l'une respective des secondes parties 28B des éléments latéraux de distribution 28.

L'air climatisé circulant dans le premier conduit de circulation 26 est ensuite diffusé par les premières parties 28A des éléments latéraux de diffusion.

L'air climatisé dévié par les seconds éléments déflecteurs 36 est ensuite diffusé par les secondes parties 28B des éléments latéraux de diffusion.

Ainsi, les éléments latéraux de diffusion 28 diffusent de l'air climatisé sur toute leur longueur, et même au niveau du module de guidage 22. En d'autres termes, l'air climatisé est diffusé de manière homogène dans la salle de la première voiture 12.

Il est à noter que l'air climatisé circulant dans le second conduit de circulation 30 est ensuite diffusé dans une salle de la seconde voiture 20, de manière classique.

Un dispositif de climatisation fonctionne de manière optimale lorsqu'il est en circuit fermé. Il est donc nécessaire de récupérer l'air de la salle à destination des moyens d'émission.

A cet effet, le dispositif de climatisation 10 comporte au moins un conduit d'évacuation d'air 42, de préférence deux conduits d'évacuation d'air 42, s'étendant chacun dans une direction verticale Z perpendiculaire aux directions longitudinale X et transversale Y, et débouchant dans ladite salle de la première voiture 12. Plus particulièrement, chaque conduit d'évacuation d'air 42 débouche dans le plafond de la salle de la première voiture 12, et comporte à son extrémité inférieure une grille autorisant le passage d'air, ladite grille affleurant le plafond.

Chaque conduit d'évacuation 42 s'étend de préférence en travers du module de guidage 22.

Par exemple, les deux conduits d'évacuation d'air 42 débouchent chacun dans un conduit de récupération d'air 44 commun, comme cela est représenté sur la figure 2. Ce conduit de récupération d'air 44 surplombe une surface inférieure du module de guidage 22, pour laisser un passage d'air sous ce conduit de récupération 44 autorisant le passage d'air depuis l'ouverture d'arrivée 24 vers le second conduit de circulation 30. Ce conduit de récupération 44 est relié à d'autres conduits convoyant l'air évacué jusqu'aux moyens d'émission. Ainsi, le dispositif de climatisation 10 peut fonctionner en circuit fermé.

Ces conduits d'évacuation 42 permettent une évacuation de l'air sans passer par les éléments latéraux 28, notamment par les secondes parties 28B de ces éléments latéraux 28, comme c'était le cas dans l'état de la technique. Ainsi, comme indiqué précédemment, les secondes parties 28B des éléments latéraux 28 sont utilisées exclusivement pour diffuser de l'air climatisé dans la salle.

Il apparaît donc clairement que la structure du dispositif de climatisation 10 selon l'invention permet une diffusion homogène de l'air climatisé dans la salle de la voiture 12.

On notera que l'invention n'est pas limitée au mode de réalisation précédemment décrit, mais pourrait présenter diverses variantes.

En particulier, on pourrait prévoir une forme différente pour les premier 34 ou second 36 éléments déflecteurs.

## Revendications

1. Dispositif (10) de climatisation d'au moins une voiture (12) d'un véhicule ferroviaire, le dispositif de climatisation (10) comprenant des moyens d'émission d'un flux d'air climatisé et un réseau (14) de circulation de l'air climatisé, ledit réseau de circulation (14) comportant un premier circuit de circulation d'air (16), comprenant :
- un module (22) de guidage d'air climatisé, comprenant une ouverture (24) d'arrivée d'air provenant des moyens d'émission,
- au moins un premier conduit de circulation d'air (26), s'étendant dans une direction longitudinale (X) en aval du module de guidage (22),
- des éléments latéraux (28) de distribution d'air, destinés à distribuer de l'air vers une salle de la voiture (12), s'étendant parallèlement au premier conduit de circulation d'air (26), agencés de part et d'autre du premier conduit de circulation d'air (26) dans une direction transversale (Y) perpendiculaire à la direction longitudinale (X), et communiquant avec ce premier conduit de circulation d'air (26),
**caractérisé en ce que** le module de guidage (22) comporte des moyens (32) de répartition propres à séparer un flux d'air issu de l'ouverture d'arrivée d'air (24), d'une part vers le premier conduit de circulation d'air (26), et d'autre part vers chaque élément latéral de distribution (28).

2. Dispositif de climatisation (10) selon la revendication 1, dans lequel chaque élément latéral de distribution (28) comporte :
- une première partie (28A) s'étendant dans la direction longitudinale (X) le long du premier conduit de circulation d'air (26), cette première partie (28A) communiquant avec ce premier conduit de circulation d'air (26), et
- une seconde partie (28B) s'étendant dans la direction longitudinale (X) le long du module de guidage (22), cette seconde partie (28B) communiquant avec les moyens de répartition (32).

3. Dispositif de climatisation (10) selon la revendication 1 ou 2, dans lequel :
- le réseau de circulation (14) comporte un second conduit de circulation d'air (30), s'étendant dans la direction longitudinale (X) à destination d'un second circuit de circulation d'air équipant une voiture adjacente (20) du véhicule ferroviaire, les premier (26) et second (30) conduits de circulation d'air s'étendant de part et d'autre du module de guidage (22) dans la direction longitudinale (X),
- les moyens de répartition (32) sont propres à séparer un flux d'air (F) issu de l'ouverture d'arrivée d'air (24) d'une part vers les premier (26) et second (30) conduits de circulation d'air, et d'autre part vers la seconde partie (28B) de chaque élément latéral de distribution (28).

4. Dispositif de climatisation (10) selon l'une quelconque des revendications précédentes, comportant au moins un conduit d'évacuation d'air (42), s'étendant dans une direction verticale (Z) perpendiculaire aux directions longitudinale (X) et transversale (Y), et destiné à déboucher dans ladite salle de la voiture (12), ledit conduit d'évacuation (42) s'étendant de préférence en travers du module de guidage (22).

5. Dispositif de climatisation (10) selon la revendication 4, comportant au moins deux conduits d'évacuation d'air (42), débouchant chacun dans un conduit de récupération d'air (44) commun, ledit conduit de récupération d'air (44) surplombant une surface inférieure du module de guidage (22), pour laisser un passage d'air sous ce conduit de récupération (44).

6. Dispositif de climatisation (10) selon l'une quelconque des revendications précédentes, dans lequel les moyens de répartition (32) comportent un premier élément déflecteur (34), comprenant deux surfaces incurvées convergeant l'une vers l'autre jusqu'à un bord d'attaque, ledit bord d'attaque étant agencé en regard de l'ouverture d'arrivée d'air (24).

7. Dispositif de climatisation (10) selon l'une quelconque des revendications précédentes, dans lequel les moyens de répartition (32) comportent deux seconds éléments déflecteurs (36) sensiblement symétriques par rapport à un plan médian vertical parallèle à la direction longitudinale (X), chaque second élément déflecteur (36) comprenant :
- une première paroi (38), comprenant un bord d'attaque agencé en regard de l'ouverture d'arrivée d'air (24), et
- deux secondes parois (40), divergeant l'une par rapport à l'autre depuis la première paroi (38) vers le conduit de distribution (28) correspondant.

8. Dispositif de climatisation (10) selon la revendication 7, dans lequel les premières parois (38) des deux seconds éléments déflecteurs (36) sont inclinées, convergeant l'une vers l'autre en direction de l'ouverture d'arrivée d'air (34).

9. Dispositif de climatisation (10) selon la revendication 7 ou 8, dans lequel chacun des seconds éléments déflecteurs (36) est formé par une feuille pliée pour former les première (38) et secondes (40) parois, par exemple une feuille métallique.

10. Véhicule ferroviaire, notamment tramway, comportant une voiture (12) s'étendant dans une direction longitudinale (X) et comportant une salle, **caractérisé en ce qu'**il comporte un dispositif de climatisation (10) selon l'une quelconque des revendications précédentes.

## Patentansprüche

1. Vorrichtung (10) zum Klimatisieren von mindestens einem Wagen (12) eines Schienenfahrzeugs, wobei die Vorrichtung zum Klimatisieren (10) Mittel zum Emittieren eines Stroms an klimatisierter Luft und ein Netz (14) zum Zirkulieren der klimatisierten Luft aufweist, wobei das besagte Netz zum Klimatisieren (14) ein erstes Netzwerk zum Zirkulieren von Luft (16) aufweist, aufweisend:
- ein Modul (22) zum Leiten von klimatisierter Luft, welches eine Öffnung (24) zum Zuführen von Luft, die von Emissionsmitteln stammt, aufweist,
- mindestens eine erste Leitung zum Zirkulieren von Luft (26), die sich entlang einer longitudinalen Richtung (X) stromabwärts vom Modul zum Leiten (22) erstreckt,
- laterale Elemente (28) zum Ausgeben von Luft, welche dafür bestimmt sind, Luft zu einem Raum des Wagens (12) auszugeben, welche sich parallel zur ersten Leitung zum Zirkulieren von Luft (26) erstrecken, welche beiderseits der ersten Leitung zum Zirkulieren von Luft (26) in einer transversalen Richtung (Y), welche senkrecht zur longitudinalen Richtung (X) ist, angeordnet sind, und welche mit dieser ersten Leitung zum Zirkulieren von Luft (26) kommunizieren,
**dadurch gekennzeichnet, dass** das Modul zum Leiten (22) Mittel (32) zum Aufteilen aufweist, welche imstande sind, einen Luftstrom, welcher von der Öffnung (24) zum Zuführen von Luft stammt, zu trennen, einerseits zur ersten Leitung zum Zirkulieren von Luft (26) und andererseits zu jedem lateralen Element zum Ausgeben (28).

2. Vorrichtung zum Klimatisieren (10) gemäß Anspruch 1, wobei jedes laterale Element zum Ausgeben (28) aufweist:
- einen ersten Teil (28A), welcher sich in der longitudinalen Richtung (X) entlang der ersten Leitung zum Zirkulieren von Luft (26) erstreckt, wobei dieser erste Teil (28A) mit dieser ersten Leitung zum Zirkulieren von Luft (26) kommuniziert, und
- einen zweiten Teil (28B), welcher sich in der longitudinalen Richtung (X) entlang des Moduls zum Leiten (22) erstreckt, wobei dieser zweite Teil (28B) mit den Mitteln zum Aufteilen (32) kommuniziert.

3. Vorrichtung zum Klimatisieren (10) gemäß Anspruch 1 oder 2, wobei:
- das Netz zum Zirkulieren (14) eine zweite Leitung zum Zirkulieren von Luft (30) aufweist, welche sich in der longitudinalen Richtung (X) zu einem zweiten Netzwerk zum Zirkulieren von Luft erstreckt, welches einen benachbarten Wagen (20) des Schienenfahrzeugs ausstattet, wobei sich die erste (26) und die zweite (30) Leitung zum Zirkulieren von Luft beiderseits des Moduls zum Leiten (22) in der longitudinalen Richtung (X) erstrecken,
- die Mittel zum Aufteilen (32) imstande sind, einen Luftstrom (F), welcher von der Öffnung zum Zuführen von Luft (24) stammt, einerseits zu der ersten (26) und der zweiten (30) Leitung zum Zirkulieren von Luft und andererseits zum zweiten Teil (28B) von jedem lateralen Element zum Ausgeben (28) zu trennen.

4. Vorrichtung zum Klimatisieren (10) gemäß irgendeinem der vorherigen Ansprüche, welche mindestens eine Leitung zum Abführen von Luft (42) aufweist, welche sich in einer vertikalen Richtung (Z) erstreckt, welche senkrecht zur longitudinalen (X) und zur transversalen (Y) Richtung ist, und dafür bestimmt ist, in den besagten Raum des Wagens (12) zu münden, wobei sich die besagte Leitung zum Abführen (42) vorzugsweise durch das Modul zum Leiten (22) erstreckt.

5. Vorrichtung zum Klimatisieren (10) gemäß Anspruch 4, welche mindestens zwei Leitungen zum Abführen von Luft (42) aufweist, welche jeweilig in eine gemeinsame Leitung zur Rückgewinnung von Luft (44) münden, wobei die besagte Leitung zur Rückgewinnung von Luft (44) eine tieferliegende Fläche des Moduls zum Leiten (22) überragt, um einen Luftdurchlass unter dieser Leitung zur Rückgewinnung (44) zu belassen.

6. Vorrichtung zum Klimatisieren (10) gemäß irgendeinem der vorherigen Ansprüche, wobei die Mittel zum Aufteilen (32) ein erstes Deflektorelement (34) aufweisen, welches zwei gekrümmte Flächen aufweist, welche zueinander bis zu einer Anströmkante konvergieren, wobei die besagte Anströmkante gegenüber von der Öffnung zum Zuführen von Luft (24) angeordnet ist.

7. Vorrichtung zum Klimatisieren (10) gemäß irgendeinem der vorherigen Ansprüche, wobei die Mittel zum Aufteilen (32) zwei zweite Deflektorelemente (36) aufweisen, welche im Wesentlichen symmetrisch bezüglich einer vertikalen Mittelebene sind, welche parallel zur longitudinalen Richtung (X) ist, wobei jedes zweite Deflektorelement (36) aufweist:
- eine erste Wand (38), welche eine Anströmkante aufweist, welche gegenüber der Öffnung zum Zuführen von Luft (24) angeordnet ist, und
- zwei zweite Wände (40), wobei die eine bezüglich der anderen von der ersten Wand (38) zu der korrespondierenden Leitung zum Ausgeben (28) hin divergiert.

8. Vorrichtung zum Klimatisieren (10) gemäß Anspruch 7, wobei die ersten Wände (38) der beiden zweiten Deflektorelemente (36) geneigt sind, wobei die eine zur anderen in Richtung der Öffnung zum Zuführen von Luft (34) konvergiert.

9. Vorrichtung zum Klimatisieren (10) gemäß Anspruch 7 oder 8, wobei jedes der zweiten Deflektorelemente (36) mittels einer gefalzten Platte gebildet ist, um die erste (38) und die zweiten (40) Wände zu bilden, zum Beispiel einer metallischen Platte.

10. Schienenfahrzeug, insbesondere Trambahn, welches einen Wagen (12) aufweist, welcher sich in einer longitudinalen Richtung (X) erstreckt, und einen Raum aufweist, **dadurch gekennzeichnet, dass** es eine Vorrichtung zum Klimatisieren (10) gemäß irgendeinem der vorherigen Ansprüche aufweist.

## Claims

1. An air-conditioning device (10) for at least one carriage (12) of a railway vehicle, the air-conditioning device (10) comprising means for emitting a flow of conditioned air and a circulation network (14) for the conditioned air, said circulation network (14) including a first air circulation circuit (16), comprising:
- a guide module (22) for conditioned air, comprising an air intake (24) opening coming from the emission means,
- at least a first air circulation duct (26), extending in a longitudinal direction (X) downstream from the guide module,
- lateral elements (28) for distributing air, intended to distribute air toward a room of the carriage (12), extending parallel to the first air circulation duct (26), arranged on either side of the first air circulation duct (26) in a transverse direction (Y) perpendicular to the longitudinal direction (X), and communicating with this first air circulation duct (26),
**characterized in that** the guide module (22) includes distribution means (32) able to separate a flow of air from the air intake opening (24), on the one hand toward the first air circulation duct (26), and on the other hand toward each lateral distribution element (28).

2. The air conditioning (10) device according to claim 1, wherein each lateral distribution element (28) includes:
- a first part (28A) extending, in the longitudinal direction (X), along the first air circulation duct (26), the first part (28A) communicating with this first air circulation duct (26), and
- a second part (28B) extending in the longitudinal direction (X) along the guide module (22), this second part (28B) communicating with the distributing means (32).

3. The air conditioning device (10) according to claim 1 or 2, wherein:
- the circulation network (14) includes a second air circulation duct (30), extending in the longitudinal direction (X) toward a second air circulation circuit equipping an adjacent carriage (20) of the railway vehicle, the first (26) and second (30) circulation ducts extending on either side of the guide module (22) in the longitudinal direction (X),
- the distribution means (32) are able to separate a flow of air (F) from the air intake opening (24) on the one hand toward the first (26) and second (30) air circulation ducts, and on the other hand toward the second part (28B) of each lateral distribution element (28).

4. The air conditioning device (10) according to any one of the preceding claims, including at least one air discharge duct (42), extending in a vertical direction (Z) perpendicular to the longitudinal (X) and transverse (Y) directions, and intended to emerge in said room of the carriage (12), said discharge duct (42) preferably extending across the guide module (22).

5. The air conditioning device (10) according to claim 4, including at least two air discharge ducts (42), each emerging in a shared air recovery duct (44), said air recovery duct (44) overhanging a lower surface of the guide module (22), to leave an air passage below that recovery duct (44).

6. The air conditioning device (10) according to any one of the preceding claims, wherein the distribution means (32) include a first deflector element (34), comprising two curved surfaces converging toward one another up to a leading edge, said leading edge being arranged across from the air intake opening (24).

7. The air conditioning device (10) according to any one of the preceding claims, wherein the distribution means (32) include two second deflector elements (36) that are substantially symmetrical relative to a vertical median plane parallel to the longitudinal direction (X), each second deflector element (36) including:
- a first wall (38), comprising a leading edge arranged across from the air intake opening (24), and
- two second walls (40), diverging relative to one another from the first wall (38) toward the corresponding distribution duct (28).

8. The air conditioning device (10) according to claim 7, wherein the first walls (38) of the second deflector elements (36) are inclined, converging toward one another toward the air intake opening (34).

9. The air conditioning device (10) according to claim 7 or 8, wherein each of the second deflector elements (36) is formed by a sheet bent to form the first (38) and second (40) walls, for instance a metal sheet.

10. A railway vehicle, in particular a tramway, comprising a carriage (12) extending in a longitudinal direction (X) and comprising a room, **characterized in that** it includes an air conditioning device (10) according to any or preceding claims.
